# FASCICULE DE BREVET EUROPEEN

(11) **EP 2 340 950 B1**
(45) Date de publication et mention de la délivrance du brevet: **24.07.2013**
(21) Numéro de dépôt: 11305009.0
(22) Date de dépôt: 05.01.2011
(51) Int. Cl.: B60G 21/05, B60G 21/055, F16F 1/14, F16F 1/366, F16F 1/371

(54) **Barre tubulaire de torsion et son application à une traverse pour essieu de véhicule automobile**
Rohrförmiges Torsionsstab und die Anwendung in einer Fahrzeug-Radaufhängung
Tubular torsion bar and its application in a vehicle suspension

(30) Priorité: 05.01.2010 FR 1050036
(43) Date de publication de la demande: 06.07.2011
(73) Titulaire: Renault S.A.S., 92100 Boulogne-Billancourt (FR)
(72) Inventeur: Berson, Julien, 72000, LE MANS (FR); Dube, Emmanuel, 72220, LAIGNE EN BELIN (FR); Veneau, Jean, 72370, ARDENAY SUR MERIZE (FR)

(56) Documents cités:
- EP-A1- 0 391 222
- DE-A1- 3 612 777
- DE-A1-102008 001 989
- DE-U1- 29 506 571
- FR-A1- 2 901 588
- GB-A- 2 141 214
- GB-A- 2 145 797
- US-A- 4 657 795
- US-A- 5 405 668
- US-A- 5 882 460
- US-A- 6 045 146
- US-A1- 2005 180 817

## Description

### DESCRIPTION

### DOMAINE DE L'INVENTION

L'invention concerne, de manière générale, des barres tubulaires de torsion, c'est-à-dire destinées à être utilisées comme ressorts grâce à l'effet de torsion à une de ses extrémités par rapport à l'autre. Elle concerne, en particulier, son application à une traverse d'essieu arrière de véhicule automobile.

### ÉTAT DE LA TECHNIQUE ANTÉRIEURE

Les trains arrière de véhicule, de type essieu souple, dans lesquels se trouvent des essieux de type utilisant des barres de torsion comme des traverses tubulaires, n'échappent pas à la tendance actuelle de recherche d'allègement du véhicule. Ces appareillages se construisent à partir d'éléments constitués d'alliages ferreux en acier et fonte ou seulement en acier pour la grande majorité des solutions. On note que l'introduction de matériaux avec des densités inférieures s'avère très difficile. Des tentatives ont été faites avec des aluminiums, mais des contraintes de fonctionnement sont un lourd handicap pour ces matériaux à bas module d'élasticité. De plus, la tenue en fatigue est souvent problématique. L'assemblage des composants se fait par soudage, lorsqu'ils sont nombreux, ou peuvent être réunis par des assemblages boulonnés, ce dernier type de solution étant peu favorable à l'allègement de l'ensemble.

Si on considère qu'aux deux extrémités de la traverse sont fixés les bras longitudinaux respectifs des deux roues arrière du véhicule, on obtient une architecture en forme de H. Dans ce cas, on cherche à trouver des solutions permettant d'abaisser la masse des composants en présence, en s'approchant du juste nécessaire pour remplir les fonctions propres à l'essieu. D'autre part, dans ce type d'appareillage, on cherche à intégrer toutes les fonctions nécessaires dans un plus petit nombre de pièces possibles pour qu'il y ait moins de liaisons dans l'ensemble et donc moins de surpoids. Cet atout disparaît lorsque le seuil de complexité rend la solution dépendante d'une fonction unique très contraignante, coûteuse en masse, à cause des problèmes mécaniques qu'elle engendre.

Dans la réalisation d'une traverse reliant les deux bras longitudinaux d'un essieu arrière de véhicule, les valeurs de raideur affichées dans le cahier des charges doivent être respectées. On note que les flexions verticale en Z et longitudinale en X doivent être limitées pour respecter les critères de raideur de pince et de carrossage du plan de roue arrière. De plus, la torsion transversale, selon Y, doit être limitée pour respecter les consignes vis-à-vis de l'anti-roulis, entre deux valeurs représentant un intervalle de tolérance précis, ceci pour assurer le moment de rappel anti-dévers propre à l'essieu.

On note qu'une tenue aux efforts de fatigue et aux cycles d'incidents définie par le profil de mission du véhicule, doit être respectée et validée par un essai sur un banc d'endurance. Enfin, la tenue aux efforts de chocs latéraux et longitudinaux, largement dépendant de la masse du véhicule sur le train arrière, ainsi que la masse non suspendue doit être respectée. Un essai sur un banc de type "mouton-pendule", ou "puits de chute", doit être effectué.

De plus, la traverse doit être fabriquée selon des critères de coûts industriels compatibles avec les objectifs des projets en cours. Le surcoût de l'allégement doit correspondre aux valeurs fixées par le cahier des charges pour rendre le projet compétitif et attractif.

Enfin, la géométrie globale de la traverse, équipée des deux bras longitudinaux latéraux, doit donner une forme en H de l'essieu, et les tolérances suffisante pour respecter le parallélisme des plans de roue, ainsi que le carrossage. Elle doit être assemblée facilement aux deux bras latéraux longitudinaux des deux roues arrière avec, de préférence, une section terminale circulaire capable d'assurer une bonne géométrie.

Actuellement, les traverses d'essieux commercialisés sont généralement fabriquées à partir de tubes en acier allié dont la partie centrale a été déformée pour s'accorder avec la raideur en torsion exigée par le cahier des charges du véhicule concerné. Sans cette transformation de la section circulaire qui réduit l'air sectoriel de la section par emboutissage ou hydroformage, la raideur en torsion serait beaucoup trop élevée par rapport à la demande du cahier des charges.

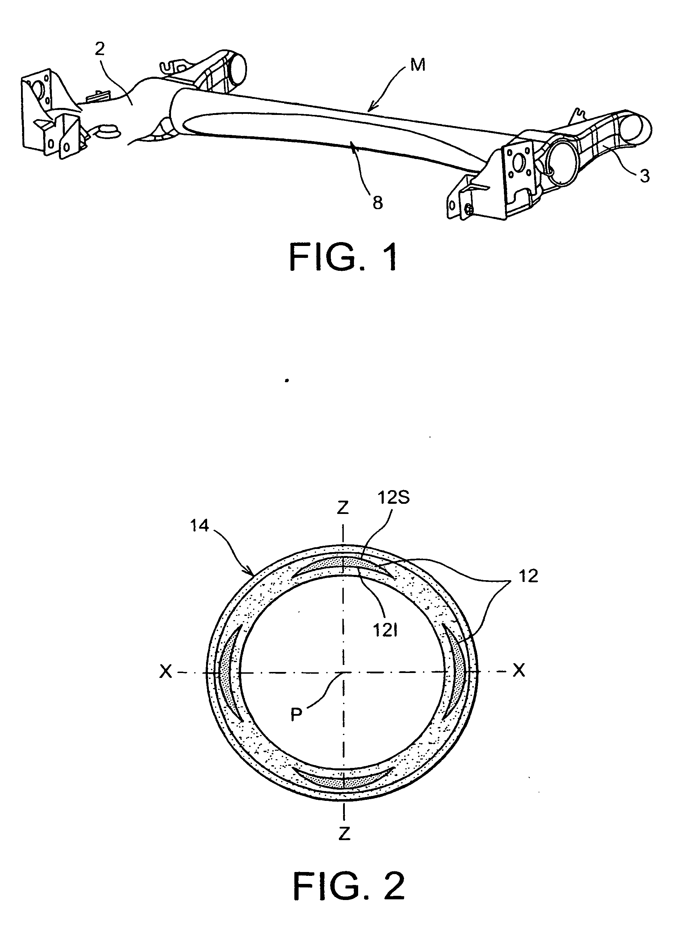

Pour contourner cette raideur trop importante, différentes solutions ont été proposées, notamment telles que décrites dans les brevets DE 23 61 009, EP 0 122 891, FR 2 481 198. Toutefois, dans le document EP 1 405 741 A1 (BENTELER), on décrit une traverse dont le profil circulaire possède une section variable et qui est formée à partir d'un flan de tôle épaisse prédécoupée. Cette traverse est décrite à la figure 1. Elle comprend principalement un corps central M dont le côté tubulaire est à section variable, grâce à une échancrure longitudinale 8 pratiquée dans le corps M, légèrement courbée de façon concave et centrée sur la longueur du corps M, pour faire varier la section de la forme tubulaire de ce dernier. Aux deux extrémités de cette traverse se trouvent deux bras latéraux longitudinaux 2 et 3 destinés à supporter chacun une roue arrière de véhicule. Grâce au profil circulaire, la traverse peut être orientée autour de l'axe Y pour positionner le centre de torsion à la bonne position. Ce procédé est depuis longtemps utilisé sur d'autres véhicules avec une traverse en acier assemblée à des bras en fonte par soudage à l'arc tournant.

Il est par ailleurs connu, du document US 5,882,460, une méthode de fabrication d'éléments de structure d'un châssis de véhicule à partir de fibres composites passant ensuite à travers un bain de résine puis une filière par la technique de pultrusion.

Une traverse réalisée en matériaux plastiques renforcés par des fibres est également connue du document GB2145797, les fibres étant orientées selon les caractéristiques mécaniques souhaitées.

Le but de l'invention est de proposer une autre conception de barre de torsion de section tubulaire, notamment pour être utilisée en tant que traverse d'essieu arrière d'un véhicule automobile.

### EXPOSÉ DE L'INVENTION

A cet effet, l'objet principal de l'invention est une barre tubulaire de torsion.

Selon l'invention, elle est constituée principalement de :
- une ossature tubulaire composite ;
- des implants longitudinaux en fibre de carbone noyés dans l'ossature ; et, de préférence,
- un enduit protecteur.

Dans son application principale, la barre de torsion constitue une traverse d'essieu arrière de véhicule automobile, destinée à relier les deux bras longitudinaux latéraux de l'essieu arrière de véhicule, qui comporte chacun une roue arrière.

De préférence, l'ossature tubulaire composite est constituée d'un mélange de fibre de verre et de résine époxy.

Dans la réalisation principale des implants longitudinaux, ceux-ci possèdent une section en forme de lunule dont la courbure est dans le même sens que celle de la section tubulaire de la barre.

Enfin, il est prévu que la barre soit cylindrique et formée par pultrusion.

### BRÈVE DESCRIPTION DES DESSINS

L'invention et ses caractéristiques techniques seront mieux décrites à la lumière de la description suivante, qui est accompagnée de deux figures représentant respectivement :
- figure 1, déjà décrite, une traverse d'essieu arrière d'un véhicule automobile selon l'art antérieur ;
- figure 2, en coupe, la section tubulaire de la barre de torsion selon l'invention.

### EXPOSÉ DÉTAILLÉ DE MODES DE RÉALISATION PARTICULIERS

En référence à la figure 2, la barre de torsion, selon la réalisation principale de l'invention, a une section circulaire. Pour alléger de façon significative la masse de cette barre de torsion, destinée spécialement à être utilisée comme traverse d'essieu, elle est constituée d'une ossature tubulaire composite 10 en matériau composite. Pour des raisons de coût associé à un procédé de fabrication capable de produire avec un temps de cycle de type "automobile", il est proposé de réaliser cette barre tubulaire par le procédé de pultrusion. Ce dernier consiste à former une matière qui est à la fois extrudée et tirée à la sortie de l'appareillage d'extrusion.

Le matériau composite, constituant l'ossature tubulaire composite 10 de la barre tubulaire, est, de préférence, de la fibre de verre à laquelle est mélangé un liant, tel que la résine époxy.

Un autre élément important constitutif de la barre de torsion selon l'invention est l'utilisation de plusieurs implants longitudinaux 12 en fibre de carbone. Ceux-ci ont une forme en lunule et sont complètement noyés dans l'ossature 10. La forme en lunule a une courbure qui est épouse la courbure de la section tubulaire de la barre tubulaire de torsion. Ces implants longitudinaux 12 sont donc concaves par rapport au centre P de la section représentée sur cette figure 2. En d'autres termes, la section plus à l'extérieur 12S de chaque implant longitudinal 12 a une courbure inférieure à celle de la surface plus à l'intérieur 121 de l'implant longitudinal 12. Ces implants longitudinaux 12 s'étalent sur toute la longueur de la barre tubulaire de torsion.

La fibre de carbone, dont sont constitués les implants longitudinaux 12, donne des propriétés de raideur en flexion satisfaisantes.

La composition de la fibre de verre et de la résine époxy constituant l'ossature tubulaire composite 10 permet de calibrer la raideur en torsion de l'ensemble, mais ne peut délivrer les raideurs en flexion demandée. Ce sont donc les implants longitudinaux 12 en fibre de carbone, matière possédant un plus fort module de déformation, et qui s'étalent sur toute la longueur de la barre tubulaire de torsion, qui permettent d'atteindre cette raideur en flexion souhaitée.

La largeur des implants longitudinaux 12 n'est pas déterminée, mais leur nombre est choisi, de préférence, entre deux et cinq. Dans le cas de la figure 2, quatre implants longitudinaux 12 sont réalisés et sont donc placés angulairement les uns par rapport aux autres à 90°.

L'apport en fibre de carbone par les quatre implants 12 permet donc d'obtenir les raideurs exigées dans la barre tubulaire de torsion dans les plans X-X, c'est-à-dire horizontal sur la figure 2, ou Z-Z, c'est-à-dire vertical sur cette même figure.

On note que la forme en lunule est un exemple de réalisation pour les implants longitudinaux 12 et que celle-ci peut être modifiée et aménagée en fonction des contraintes de fonctionnement ou de fabrication.

De par sa forme cylindrique obtenue par pultrusion, la traverse constituée d'une barre tubulaire de torsion telle que décrite, conserve une géométrie qui permet un assemblage par collage avec les bras latéraux longitudinaux qui complètent l'assemblage constituant l'essieu. Des alésages correspondant au diamètre de la traverse sont alors aménagés dans les bras longitudinaux latéraux pour assurer un jeu suffisant nécessaire à ce collage, par exemple un jeu compris entre 0,4 et 1,4 mm.

On constate que l'ensemble ainsi décrit est recouvert d'un enduit protecteur (14) dont l'épaisseur est adaptée aux différentes applications prévues.

La barre tubulaire de torsion, ainsi décrite, n'est pas limitée à l'application à une traverse d'essieu arrière de véhicule.

En effet, à partir de cette technologie, on peut imaginer d'autres types d'applications dans la liaison au sol.

Ce concept de liaison cylindrique de pièce élancée peut s'utiliser comme traverse de liaison sur des berceaux supports de train avant ou arrière, entre des parties latérales obtenues par fonderie, par exemple.

Les axes de colonnes de direction de véhicules automobiles peuvent également utiliser cette technologique, en combinant les intérêts de raideur en torsion et la tenue au flambage. On précise que l'assistance à la direction doit se situer en aval de la transmission de raideur, c'est-à-dire sur le couple pignon-crémaillère.

## Revendications

1. Barre tubulaire de torsion, constituant principalement :
- une ossature tubulaire composite (10) ; et
- des implants longitudinaux (12) en fibre de carbone noyés dans l'ossature tubulaire composite (10), **caractérisé en ce que** les implants ont une section en forme de lunule dont la courbure est dans le même sens que celle de la section tubulaire de la barre.

2. Traverse d'essieu de véhicule automobile destinée à relier les deux bras longitudinaux d'un essieu arrière du véhicule, qui supportent chacun une roue arrière, **caractérisée en ce qu'**elle est constituée d'une barre tubulaire de torsion selon la revendication 1.

3. Traverse selon la revendication 2, **caractérisée en ce qu'**elle est recouverte d'un enduit protecteur (14).

4. Traverse selon la revendication 2, **caractérisée en ce que** l'ossature tubulaire composite (10) est constituée d'un mélange de fibre de verre et de résine époxy.

5. Traverse selon la revendication 2, **caractérisée en ce que** la section de la barre tubulaire de torsion est cylindrique et qu'elle est formée par pultrusion.

## Patentansprüche

1. Rohrförmiger Torsionsstab, der hauptsächlich aus
- einem rohrförmigen Verbundgerippe (10) und
- länglichen Implantaten (12) aus Carbonfaser besteht, die in das rohrförmige Verbundgerippe (10) eingebettet sind, **dadurch gekennzeichnet, dass** die Implantate einen lunulaförmigen Querschnitt haben, dessen Krümmung in derselben Richtung wie die des rohrförmigen Querschnitts des Stabs verläuft.

2. Kraftfahrzeugachsenquerträger, der dazu bestimmt ist, die beiden Längsarme einer Hinterachse des Fahrzeugs, die jeweils ein Hinterrad stützen, zu verbinden, **dadurch gekennzeichnet, dass** er aus einem rohrförmigen Torsionsstab nach Anspruch 1 besteht.

3. Querträger nach Anspruch 2, **dadurch gekennzeichnet, dass** er mit einem Schutzüberzug (14) überzogen ist.

4. Querträger nach Anspruch 2, **dadurch gekennzeichnet, dass** das rohrförmige Verbundgerippe (10) aus einem Gemisch aus Glas- und Epoxidharzfasern besteht.

5. Querträger nach Anspruch 2, **dadurch gekennzeichnet, dass** der Querschnitt des rohrförmigen Torsionsstabs zylindrisch ist und dass er mittels Pultrusion gebildet ist.

## Claims

1. Tubular torsion bar forming mainly:
- a composite tubular framework (10); and
- carbon fibre longitudinal implants (12) embedded in the composite tubular framework (10), **characterized in that** the implants have a lunula-shaped section of which the curvature is in the same direction as that of the tubular section of the bar.

2. Motor-vehicle axle cross member designed to connect the two longitudinal arms of a rear axle of the vehicle, which each support a rear wheel, **characterized in that** it consists of a tubular torsion bar according to Claim 1.

3. Cross member according to Claim 2, **characterized in that** it is covered with a protective coating (14).

4. Cross member according to Claim 2, **characterized in that** the composite tubular framework (10) consists of a mixture of glass fibre and epoxy resin.

5. Cross member according to Claim 2, **characterized in that** the section of the tubular torsion bar is cylindrical and that it is formed by pultrusion.
